# FASCICULE DE BREVET EUROPEEN

(11) **EP 3 724 752 B1**
(45) Date de publication et mention de la délivrance du brevet: **13.09.2023**
(21) Numéro de dépôt: 18839819.2
(22) Date de dépôt: 11.12.2018
(51) Int. Cl.: G06F 3/06, G06F 12/08

(54) **PROCEDE DE GESTION DU SYSTEME DE FICHIERS D'UN TERMINAL INFORMATIQUE**
VERFAHREN ZUR VERWALTUNG DES DATEISYSTEMS EINES COMPUTERENDGERÄTS
METHOD FOR MANAGING THE FILE SYSTEM OF A COMPUTER TERMINAL

(30) Priorité: 12.12.2017 FR 1762002
(43) Date de publication de la demande: 21.10.2020
(73) Titulaire: Moore, 92210 Saint-Cloud (FR)
(72) Inventeur: POUPET, Paul, 92210 SAINT-CLOUD (FR); POILVE, Benjamin, 75116 PARIS (FR)
(74) Mandataire: IP Trust
(86) Numéro de dépôt international: PCT/FR2018/053199
(87) Numéro de publication internationale: WO 2019/115929

(56) Documents cités:
- US-A1- 2008 172 423
- US-A1- 2009 150 593

## Description

### Domaine de l'invention

La présente invention concerne le domaine du stockage de données hybride mettant en oeuvre une ressource de stockage primaire de capacité limitée présentant un faible temps d'accès et/ou débit de données, et une ressource secondaire présentant une plus grande capacité mais un temps d'accès et/ou débit plus élevé.

Les capacités de stockage rapide sont utilisées pour l'enregistrement de fichiers auquel l'utilisateur souhaite pouvoir accéder pour les lire ou les modifier, ainsi que des fichiers temporaires, par exemple des fichiers de cache évitant d'avoir à accéder de manière répétée à des fichiers stockés en mémoire secondaire, ou encore des fichiers de travail transitoire.

Lorsque la mémoire primaire est saturée, certaines applications peuvent présenter de graves ralentissements.

Il est donc possible que le système de gestion de fichiers d'un équipement informatique gère la répartition des ressources de stockage rapide et des ressources de stockage de grande capacité afin d'optimiser le fonctionnement des applications exécutées sur un équipement informatique.

Il est alors nécessaire de prévoir un processus d'allocation des différentes ressources de stockage et d'accès aux données enregistrées sur différentes ressources, de manière souvent transparente pour l'utilisateur.

Par exemple, le système d'exploitation peut décider du déplacement de certains fichiers et de certaines données et applications du disque dur vers la mémoire SSD et inversement, en prévoyant que les données les plus fréquemment utilisées se retrouveront sur le SSD et les données les moins fréquemment utilisées restent sur le disque dur. Le fichier original n'est toutefois pas supprimé tant que la copie d'une ressource à l'autre n'est pas terminée, par mesure de sécurité. Une fois que cette opération est effectuée, le fichier original est supprimé.

Dans les environnements de machine virtuelle, la charge de travail du système de fichiers implique généralement un nombre relativement faible de fichiers volumineux (par exemple, des fichiers de disque virtuel), auxquels les opérations de lecture et d'écriture sont les opérations principales. Dans de nombreux cas, seule une partie relativement petite des données comprenant un disque virtuel est écrite et / ou lue à tout moment.

Dans les systèmes de stockage hiérarchisés, c'est-à-dire ceux qui incluent deux ou plusieurs types différents de périphérique de stockage et / ou de support, les décisions de basculer entre différents niveaux de stockage ont généralement été prises en fonction des différentes vitesses d'accès aux données. Par exemple, dans des stockages multi-niveaux typiques impliquant des mémoires flash et des disques durs, le stockage flash peut être utilisé à des fins de mise en cache, en raison de ses temps d'accès relativement rapides, tandis que le stockage sur disque est utilisé pour le stockage à long terme. Dans un système de stockage hiérarchisé typique, les paramètres de stockage tels que la taille de bloc sont déterminés pour optimiser les performances et / ou s'adapter à une limitation de l'un ou l'autre type de stockage et le même paramètre est utilisé pour les deux types de stockage.

### Etat de la technique

On a proposé dans l'état de la technique d'améliorer ces principes pour une gestion optimisée des ressources de stockage.

Pour optimiser les performances de stockage, on connaît dans l'état de la technique le principe du stockage hybride combinant une mémoire flash avec un disque dur traditionnel. Un disque dur hybride (ou SSHD, pour "Solid State Hybrid Drive") comprendra ainsi quelques giga-octets de capacité flash ainsi qu'un disque dur plus volumineux, les données consultées le plus fréquemment ou critiques - dites « données chaudes » - étant mises en cache sur le support mémoire flash et retrouvées plus rapidement que si elles étaient stockées directement sur les disques durs.

A titre d'exemple, la demande de brevet WO2013165966 décrit le fonctionnement d'un système de stockage qui consiste à établir un premier volume de disque virtuel comprenant l'attribution d'une première partie et d'une première capacité de stockage de faible efficacité ; à générer une valeur statistique d'utilisation pour le premier volume de disque virtuel; à calculer une première ligne de tendance pour ajuster la première partie et la première capacité de stockage de faible efficacité sur la base de la valeur statistique d'utilisation.

Une autre solution est décrite dans le brevet US8463825 concernant un système de stockage de données, comprenant un premier dispositif de stockage d'un premier type de dispositif de stockage, un deuxième dispositif de stockage d'un second type de dispositif de stockage et un processeur configuré pour implémenter un système de fichiers hybride configuré pour stocker chacune d'une pluralité de données des valeurs dans au moins un emplacement primaire correspondant, qui, pour une valeur de donnée, peut se trouver soit dans le premier dispositif de stockage, soit dans le second dispositif de stockage; dans lequel le système de fichiers hybride est configuré pour utiliser une première approche d'accès optimisée basée sur un premier attribut d'accès du premier type de dispositif de stockage pour interagir avec le premier dispositif de stockage et une seconde approche d'accès optimisée basée sur un deuxième attribut d'accès du second dispositif de stockage tapez pour interagir avec le second périphérique de stockage.

On connaît aussi la demande de brevet US2008172423 décrivant un programme commandant une étape d'enregistrement de données par un changement d'état d'un dispositif de stockage primaire, une étape de copie de l'espace de nom générant une base de données copiant l'espace de nom du dispositif de stockage primaire, et une étape d'instruction de mouvement de fichier instruisant un mouvement de fichier entre le dispositif de stockage primaire et un dispositif de stockage secondaire en fonction de la base de données copiant l'espace de nom.

On connaît encore la demande de brevet US2009150593 décrivant une autre solution d'architecture destinée à améliorer l'allocation de stockage de mémoire. Cette architecture repose sur une hiérarchie de mémoires non volatiles (par exemple, flash, lecteur de disque dur rapide, lecteur de disque dur lent, bande magnétique, etc.), d'une manière qui diffère de la séparation configurations de disque où 100% des informations sont stockées sur le disque avec le stockage de cache ci-dessus. Contrairement à un disque hybride, l'architecture décrite peut permettre de stocker N pages sur M dispositifs, où N et M sont des entiers, et où les M dispositifs ont des caractéristiques différentes et les N pages sont stockées en commun une fois.

### Inconvénients de l'art antérieur

Les solutions de l'art antérieur prennent généralement en compte le traitement en cours pour déterminer lors d'une requête d'accès à une donnée ou un fichier enregistré en mémoire le chemin d'accès, mais ne permettent pas d'anticiper un tel besoin d'accès à une donnée ou un fichier pour permettre de redéfinir l'allocation entre les différentes ressources de stockage de sorte à assurer la disponibilité des fichiers sur la mémoire rapide locale au moment où une application à besoin de procéder à sa lecture ou à sa modification.

Il en résulte des temps d'accès long lorsque la donnée ou le fichier n'est pas disponible dans la mémoire haute performance, ce qui résulte en une dégradation générale de l'expérience utilisateur, sous la forme de ralentissement, temps de chargement et parfois un disfonctionnement majeur.

### Solution apportée par l'invention

Pour remédier à ces inconvénients, l'invention concerne selon son acception la plus générale un procédé de gestion du système de fichiers d'un terminal informatique présentant les caractéristiques techniques énoncés par la revendication 1, ainsi qu'un équipement présentant les caractéristiques techniques énoncés par la revendication 4.

Le terminal informatique dispose d'une mémoire locale primaire de haute performance, ainsi qu'une mémoire secondaire de performance moindre, comportant des étapes de calcul périodique de l'adressage primaire ou secondaire d'un fichier numérique à enregistrer, à lire ou à modifier en fonction d'une loi recalculée périodiquement.
- Ladite étape de calcul de l'adressage est fonction de métadonnées présentes dans ledit fichier numérique à traiter, de l'historique d'accès dudit fichier à traiter et de l'arborescence locale des fichiers,
- Ladite loi est déterminée à partir d'une loi dynamique, recalculée en tâche de fond, par des traitements fonction des usages de l'utilisateur, pour commander la recopie d'un fichier en mémoire secondaire sur la mémoire primaire avant la requête d'accès audit fichier, et à effacer les fichiers enregistrés dans ladite mémoire primaire dont ladite loi détermine la non-nécessité pour l'usage utilisateur,

- Ledit procédé comporte des étapes exécutées en tâche de fond de recopie des fichiers enregistrés sur la mémoire primaire sur l'équipement de stockage secondaire,
- Une partie au moins des commandes de modification d'un fichier enregistré dans la mémoire secondaire entraîne le téléchargement de la partie dudit fichier à modifier sur la mémoire locale, à déverrouiller la partie du fichier à modifier sur la mémoire primaire, à modifier ladite partie du fichier à modifier, à verrouiller ladite partie du fichier et à resynchroniser le fichier secondaire avec le fichier primaire, ou bien selon une métrique relative à la complexité des opérations décrite, à écrire les modifications directement en mémoire secondaire.

L'invention se distingue de l'art antérieur par l'apprentissage continu et de manière générale une stratégie de notation (scoring) en sac à dos, et la manière de voir le stockage rapide comme une ressource à optimiser dans son ensemble.

Selon une variante, ladite loi de commande étant déterminée pour minimiser le volume des données transférées entre la mémoire primaire rapide et la mémoire secondaire et à minimiser le défaut de cache local.

Avantageusement, l'arborescence des fichiers et la table d'indexation de la totalité des fichiers locaux et distant est enregistrée dans la mémoire primaire et en ce que le système d'exploitation comporte des moyens de visualisation transparent de l'arborescence et des métadatas.

De préférence, le procédé de gestion du système de fichiers comporte des prétraitements en tâche de fond du fichier de log pour regrouper les informations de log selon un critère de proximité (vector embedding).

Avantageusement, le procédé comporte des prétraitements en tâche de fond de regroupement de fichiers sur un même espace de stockage en fonction d'un indicateur de distance vectorielle entre lesdits fichiers.

Selon un mode de réalisation particulier, lesdits prétraitements sont réalisés au moment des actions sur les fichiers (log), pour l'entraînement d'un réseau de neurone sur ces logs, et à partir d'un réseau pré-entraîné pour calculer un indicateur numérique correspondant à la probabilité d'utilisation future pour chacun des fichiers.

Selon une variante, l'adressage d'un fichier est déterminé par application d'un algorithme d'optimisation combinatoire appliqué audit indicateur numérique de probabilité d'utilisation et des caractéristiques de la mémoire locale et de vitesse de transfert inter-mémoire.

L'invention concerne également un équipement informatique comprenant un processeur et une ou plusieurs mémoires locales, par exemple une mémoire flash ou un disque dur, ainsi qu'une mémoire pour l'enregistrement d'un code commandant la gestion du système de fichiers conformément au procédé précité.

### Description détaillée d'un exemple non limitatif de l'invention

La présente invention sera mieux comprise à la lecture de la description qui suit, concernant un exemple non limitatif de réalisation, et se référant aux dessins annexés où :

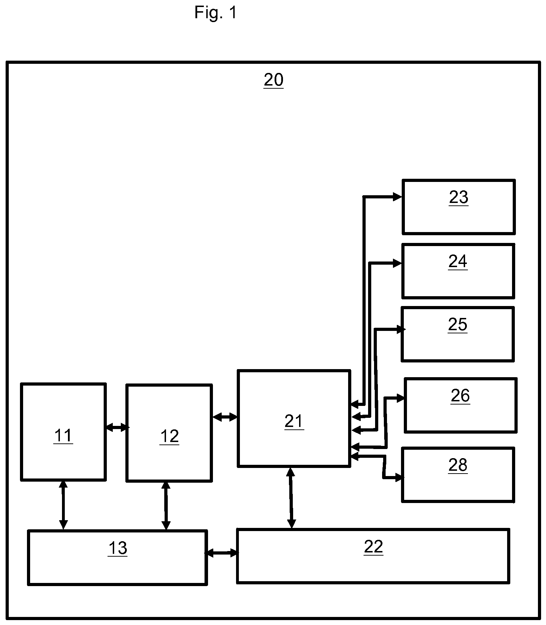

- la figure 1 représente une vue schématique de l'architecture matérielle d'un système selon l'invention
- la figure 2 représente une vue schématique de l'architecture fonctionnelle d'un système selon l'invention
- les figures 3 à 12 présentent des exemples de processus de traitement

### Contexte de l'invention

L'invention concerne un système de stockage mixte transparent pour l'utilisateur.

Le but est de proposer une solution complète permettant de stocker et de garder accessible une grande quantité de données, quantité excédant la capacité de stockage primaire de l'équipement informatique utilisé.

L'invention repose sur les principes suivants :
- La virtualisation du système de fichiers pour gérer de manière transparente les fichiers
- l'utilisation d'une mémoire secondaire basse performance pour le stockage de masse
- l'analyse des habitudes de l'utilisateur et des applications exécutées sur l'équipement informatique primaire rapide afin de déterminer une priorité pour les fichiers à stocker en mémoire primaire
- l'utilisation du stockage primaire rapide comme cache d'accélération pour une rapidité équivalente à un système de gestion de fichiers classique
- la conservation des métadonnées de tous les fichiers associés pour émuler leur présence sans avoir à questionner la mémoire secondaire.

Du point de vue de l'utilisateur, la capacité de stockage est équivalente à la somme des capacités de stockage des différents dispositifs de stockage.

S'il reste suffisamment de place sur l'espace de stockage rapide, le document est simplement ajouté et tagué en vue de sa synchronisation ultérieure.

Sinon, l'espace de stockage primaire rapide est libéré par la suppression des documents considéré comme les moins nécessaire à l'utilisateur dans le futur proche par l'algorithme et les nouveaux documents sont ajoutés et tagués en vue de leur synchronisation ultérieure.

### Emulation du système de gestion de fichiers

Le stockage mixte est mis en place grâce à un logiciel lancé sur l'ordinateur hôte qui émule un système de fichiers (filesystem). Pour ce faire, le driver générique FUSE est utilisé.

Le système de fichiers (« filesystem ») est constitué de trois composantes :
1. Un métacache constitué par un fichier dans le stockage physique de l'équipement informatique, qui contient les métadonnées liées à chaque fichier. Le métacache est implémenté en base SQL.
2. Un accès à une ressource de stockage secondaire dans lequel sont stockés l'ensemble des fichiers du système de fichiers (« filesystem »).
3. Un cache primaire rapide, où sont stockés les fichiers que l'utilisateur voudra le plus probablement utiliser prochainement.

Si le fichier se trouve dans le cache local, il est accédé en priorité afin d'améliorer les performances.

### Description de l'architecture matérielle du système

Il est constitué d'un équipement informatique (20), par exemple une tablette, un ordinateur

L'équipement informatique (20) comprend un processeur (11) et une ou plusieurs mémoires primaires rapides (23 à 28), par exemple une mémoire flash, et une ou plusieurs mémoires secondaires de masse (21), par exemple un disque dur.

### Algorithme de traitement de données

Le but de cette section est d'expliciter les traitements de donnée effectués pour servir au mieux l'usage utilisateur. Ces traitements ont deux buts :
* Déterminer les motifs d'utilisation de fichiers pour pouvoir prédire avec la plus grande précision les fichiers à stocker sur le cache (dans le contexte d'utilisation hors ligne, mais aussi pour accélérer la responsivité du système).
* Arriver à déterminer des "groupes" de fichiers afin de proposer à l'utilisateur des classifications de fichier adaptées à son usage, mais aussi pour faire de la pré-lecture de fichiers (pre-fetching) pour améliorer les performances.

Ces traitements doivent s'effectuer avec un certain nombre de contraintes liées à l'application spécifique à savoir

Le besoin d'effectuer le traitement sur des données en continu (stream), la limitation de la quantité de données stockée concernant chaque fichier, un espace en changement continu (ajout/retrait de fichiers...), la limitation de puissance de calcul lié à ce processus.

Ce processus repose sur des algorithmes d'apprentissage (deep learning), en partant d'un modèle pré-entrainé qui va s'adapter aux usages spécifiques de l'utilisateur pour offrir une expérience optimale.

Pour faire fonctionner cet algorithme, nous nous basons sur l'ensemble des appels « syscall » qui sont enregistrés dans une base de données. Ceci nous permet de développer pour chaque fichier un profil d'utilisation historique mais aussi un profil basé sur des méthodes d'embedding des metadatas.

Cette matrice de caractérisation dynamique pour chaque fichier est fournie à un classificateur basé sur un réseau neuronal qui va ensuite noter chacun des fichiers. Cette note reflète l'importance au vu de l'usage que le fichier va avoir dans le futur proche.

Des statistiques de co-usage sont utilisées pour normaliser cette note, qui devient alors la base d'un algorithme de sac-à-dos pour choisir les fichiers à embarquer.

Le réseau neuronal en question est basé sur une matrice commune à tous les téléphones qui apprend continûment sur les usages de l'utilisateur. Ces matrices sont ensuite agrégées pour permettre un apprentissage fédéré qui permet de continûment améliorer le modèle.

### Mise en oeuvre de l'invention

L'utilisateur va utiliser son équipement informatique de manière transparente.

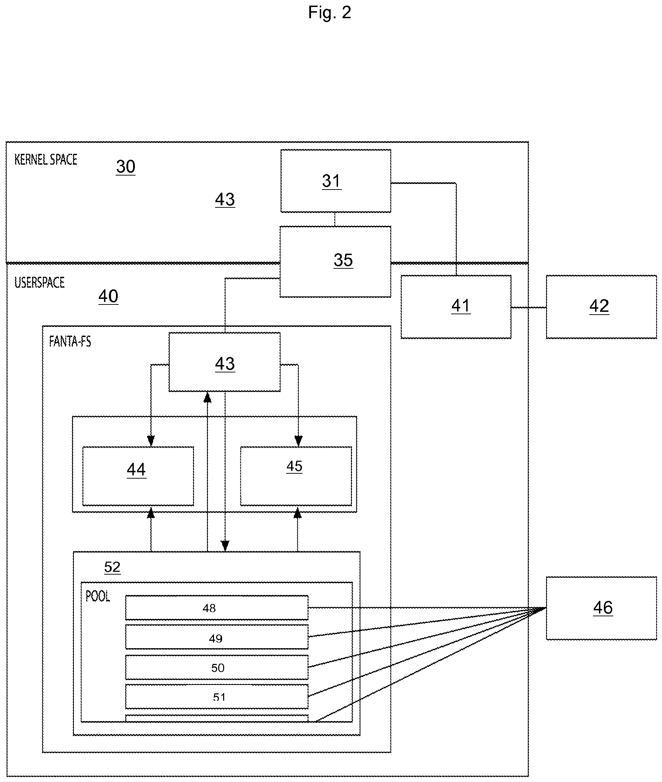

La figure 2 représente une vue schématique de l'architecture fonctionnelle de l'invention.

De manière connue, le processeur d'un équipement informatique possède au moins deux modes de fonctionnement, dont un mode dit superviseur ou mode noyau (30) qui n'impose pas de restrictions sur les instructions exécutées, et un mode dit utilisateur (40) qui limite ce que peuvent faire les instructions, et quand le système d'exploitation (31) met en oeuvre cette distinction en faisant fonctionner les autres programmes en mode utilisateur et en se réservant le mode superviseur, on dit que les programmes ainsi restreints font partie de l'espace utilisateur (40) (en anglais, userspace).

L'application va de manière classique envoyer au noyau de système d'exploitation (30) (« Kernel ») un appel système relatif à la gestion du système de fichiers (« filesystem ») (par exemple: read, write, open, make dir..).

Dans la solution proposée par l'invention, on utilise la librairie FUSE/Dokani (35) pour "ramener" ces appels en dans l'application USERSPACE (40) et donc utiliser un programme (41) pour y répondre.

L'espace USERSPACE (40) ou « système de fichiers en espace utilisateur» est un espace permettant à un utilisateur (42) sans privilèges particuliers d'accéder à un système de fichiers (43) sans qu'il soit nécessaire de modifier les sources du noyau, via une application désignée usuellement par le nom FUSE.

Fuse a pour effet de relayer ces appels et de renvoyer les réponses. Une bibliothèque "binding" est utilisée pour communiquer avec un programme écrit en RUST pour l'exécution du code informatique destiné à la mise en oeuvre de l'invention.

Le programme principal a pour action de prendre ces appels et d'exécuter des actions pour y répondre. Pour cela il dispose de deux zones de mémoires.
a) Un cache (44), qui permet de stocker les fichiers en eux-mêmes.
b) Un "métacache" (45) qui stocke à la fois les meta-data des fichiers, leurs liens physiques, leur statut de synchronisation, leur historique, leur note d'importance, sous la forme d'une dataBase SQL (46).

Pour chaque appel, le processus principal va donc effectuer une action dans ces zones de stockages puis renvoyer une réponse à FUSE (35). Il est à noter que cette réponse peut être sujette à un "signal" renvoyé par un processus léger (« thread ») de traitement (48 à 51).

La seconde partie du programme s'exécute en arrière-plan (52) (programme de type "deamon") pour effectuer une série de taches asynchrones, soit en réaction à une action du VFS qui peut lui envoyer des signaux via un canal, soit de manière périodique. Cette organisation permet de répondre à deux problématiques :
a) Eviter d'être "bloquant" vis à vis de l'interface utilisateur lors de taches longues à effectuer en effectuant ces taches dans un processus léger (thread).
b) Mettre en place une série de tache périodique. C'est par exemple dans un processus léger (thread) du daemon que se fait la notation des fichier par l'algorithme et la suppression / déplacement automatique des fichiers prédits.

Il est à noter que ce programme « daemon » (52) va aussi pouvoir modifier les fichiers du cache (44) (par exemple lors de téléchargement) et du métacache (45) (par exemple pour changer le statut de synchronisation d'un fichier).

### ALGORITHME DE PREDICTION

L'algorithme de prédiction est constitué de trois briques techniques principales.

### - Pré-Traitement

Le but des étapes de pré-traitement est de formatter des données afin de pouvoir y appliquer des méthodes de « deep-learning ». Un certain nombre des données sont nommées "continues" car elles évoluent dans un espace continu ou pseudo continu ce qui permet de facilement les interpréter sous forme de vecteurs. Ce n'est pas le cas de données comme les extensions fichier, ou bien les chemins d'accès des fichiers. Pour employer ces métadatas, on développe des méthodes de "vector embedding". Ces méthodes ont pour but de décrire ces paramètres dans un espace vectoriel continu. Pour cela on utilise dans cette implémentation du clustering de Markof pour représenter les distances fichier de manière continue, et du "vector embedding" pour dégager un espace vectoriel ou on peut interpréter les distances des fichiers.

### - Analyse

L'analyse repose sur un modèle de deep-learning implémenté en TENSORFLOW, pré-entrainé sur des sets génériques qui, en partant du vecteur de description agrégé des fichiers, permet de prédire sur une période donnée la probabilité d'utilisation d'un fichier. Ce modèle est continuellement réentrainé sur les données de l'utilisateur.

### - Post-traitement

Le post traitement consiste à choisir un set de fichiers qui va donner la satisfaction maximale. Cette satisfaction est mesurée selon deux métriques. D'une part la probabilité d'un défaut de cache sur la période à venir, mais aussi la consommation de bande passante (pour des raisons économiques). Dans la pratique, cela signifie utiliser un algorithme du sac-à-dos dans lequel l'espace disponible est celui du disque local, le poids celui des fichier, et le critère d'utilité est la note données par le modèle neuronal.

Ces méthodes s'exécutent de manière asynchrone.

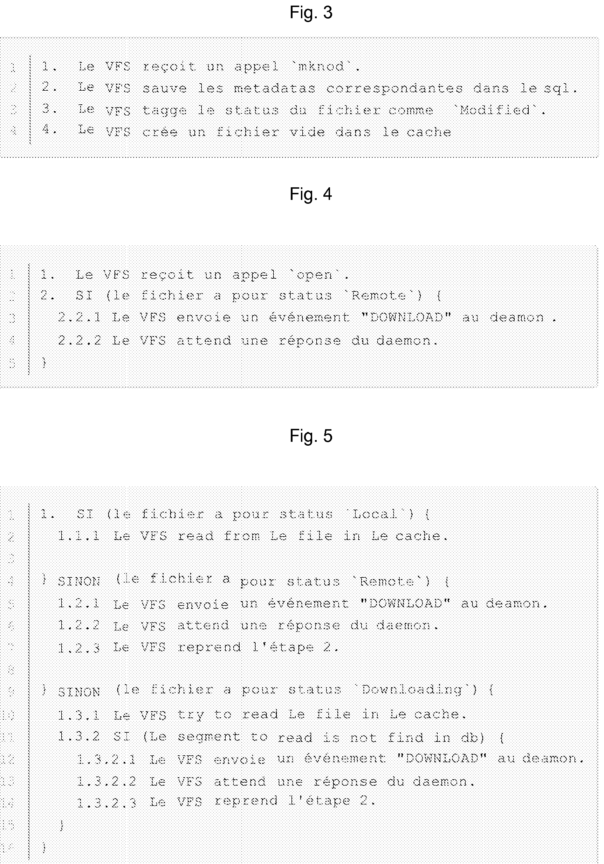

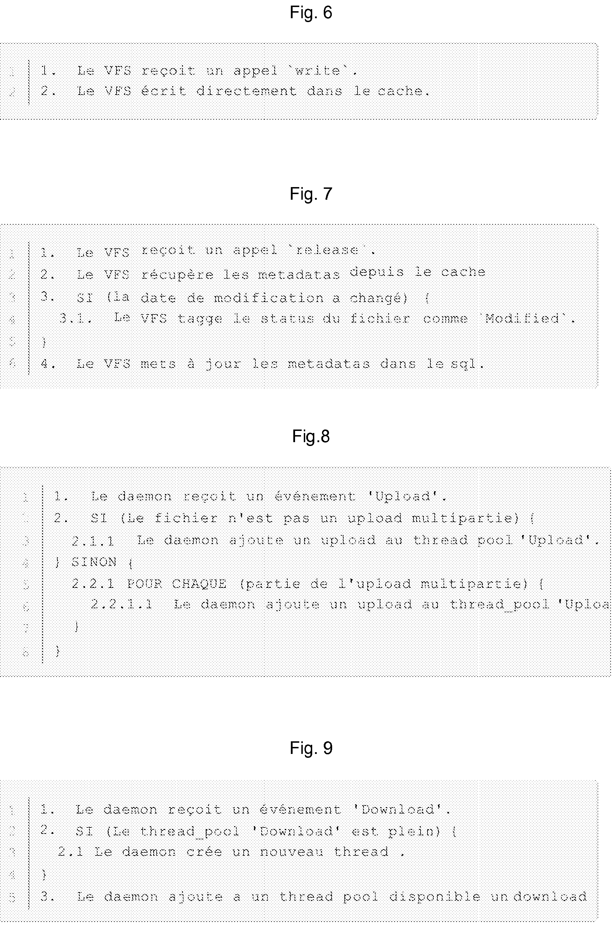

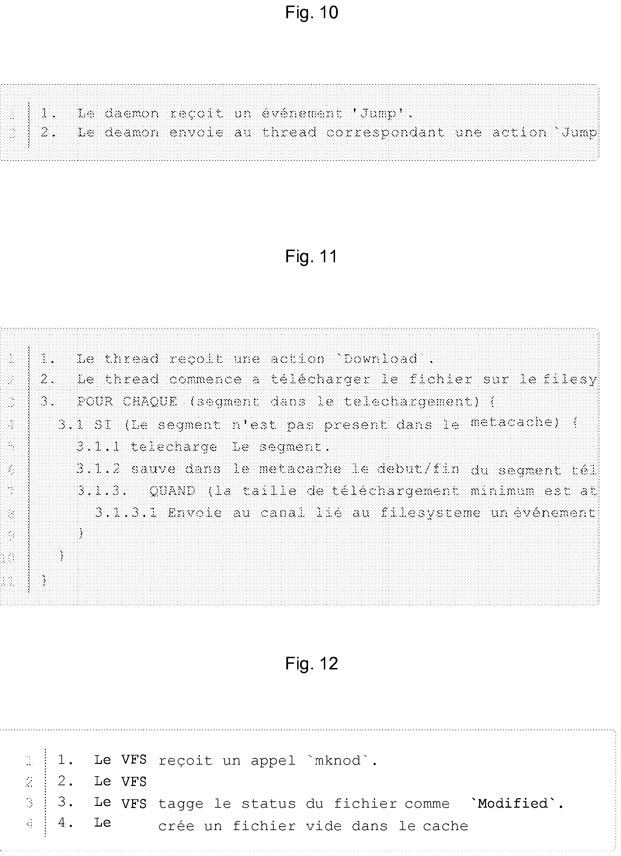

Les figures 3 à 12 présentent des exemples de processus de traitement (thread) :
- Création d'un fichier par un utilisateur (figure 3)
- Ouverture d'un fichier par un utilisateur (figure 4)
- Lecture d'un fichier par un utilisateur (figure 5)
- Ecriture d'un fichier par un utilisateur (figure 6)
- Fermeture d'un fichier par un utilisateur (figure 7)
- Réception par le daemon d'un événement de type « déplacement mémoire secondaire» (figure 8)
- Réception par le daemon d'un événement de type « déplacement mémoire primaire» (figure 9)
- Réception par le daemon d'un événement de type « Jump» (figure 10)
- Réception par le daemon d'un événement de type « Download» (figure 11)
- Réception par le ensemble de processus léger de déplacement d'un événement de type « déplacement en mémoire primaire» (figure 12).

## Revendications

1. - Procédé de gestion du système de fichiers d'un terminal informatique (20) comprenant un processeur (11) et une ou plusieurs mémoires primaires rapides (23 à 28) et une ou plusieurs mémoires secondaires de masse (21), ledit procédé comportant des étapes de calcul périodique de l'adressage primaire ou secondaire d'un fichier numérique à enregistrer, à lire ou à modifier en fonction d'une loi de commande recalculée périodiquement pour minimiser le volume des données transférées entre la mémoire primaire rapide et la mémoire secondaire de masse et à minimiser le défaut de cache local,
**caractérisé en ce que**
• Ladite étape de calcul de l'adressage est fonction de métadonnées présentes dans ledit fichier numérique à traiter, de l'historique d'accès dudit fichier à traiter et de l'arborescence locale des fichiers,
• Ladite loi est déterminée à partir d'une loi de référence, recalculée en tâche de fond, par des traitements fonction des usages de l'utilisateur, pour commander la recopie d'un fichier distant sur la mémoire primaire avant la requête d'accès audit fichier, et à effacer les fichiers enregistrés dans ladite mémoire primaire dont ladite loi détermine un indicateur d'utilisation inférieur à une valeur seuil,
• Et **en ce que** ledit procédé comporte des étapes exécutées en tâche de fond de recopie des fichiers enregistrés sur ladite mémoire primaire rapide (23 à 28) sur ladite mémoire secondaire de masse (21),
• **en ce qu'**une partie au moins des commandes de modification d'un fichier enregistré dans la mémoire secondaire entraîne le téléchargement de la partie dudit fichier à modifier sur la mémoire locale, à déverrouiller la partie du fichier à modifier sur la mémoire primaire, à modifier ladite partie du fichier à modifier, à verrouiller ladite partie du fichier et à resynchroniser le fichier secondaire avec le fichier primaire
• En **en ce qu'**il comporte des prétraitements de regroupement en tâche de fond réalisés au moment des actions sur les fichiers (log), pour l'entraînement d'un réseau de neurone sur ces logs, et à partir d'un réseau pré-entrainé pour calculer un indicateur numérique correspondant à la probabilité d'utilisation future pour chacun des fichiers, l'adressage d'un fichier étant déterminé par application d'un algorithme d'optimisation combinatoire appliqué audit indicateur numérique de probabilité d'utilisation et des caractéristiques de la mémoire locale et de la communication réseau
• lesdits prétraitements en tâche de fond commandent le regroupement des informations de log selon un critère de proximité (vector embedding) ou en fonction d'un indicateur de distance vectorielle entre lesdits fichiers..

2. - Procédé de gestion du système de fichiers d'un terminal informatique selon la revendication 1 **caractérisé en ce que** l'arborescences des fichiers et la table d'indexation de la totalité des fichiers locaux et distants est enregistrée dans la mémoire primaire et **en ce que** le système d'exploitation comporte des moyens de visualisation transparent de l'arborescence.

3. - Equipement informatique comprenant un processeur (11) et une ou plusieurs mémoires locales (12), par exemple une mémoire flash ou un disque dur, ainsi qu'une mémoire pour l'enregistrement d'un code commandant la gestion du système de fichiers conformément au procédé conforme à la revendication 1.

## Patentansprüche

1. Verfahren zum Verwalten des Dateisystems eines Computerendgeräts (20), umfassend einen Prozessor (11) und einen oder mehrere primäre Schnellzugriffsspeicher (23 bis 28) und einen oder mehrere sekundäre Massenspeicher (21), wobei das Verfahren Schritte eines periodischen Berechnens der primären oder der sekundären Adressierung einer digitalen Datei aufweist, die gespeichert, gelesen oder in Abhängigkeit von einem Steuerungsgesetz verändert werden soll, das zum Minimieren des Volumens von Daten periodisch neu berechnet wird, die zwischen dem primären Schnellzugriffsspeicher und dem sekundären Massenspeicher übertragen werden, und um den Ausfall des lokalen Caches zu minimieren,
**dadurch gekennzeichnet, dass:**
• der Schritt des Berechnens der Adressierung in Abhängigkeit von Metadaten, die in der digitalen Datei vorhanden sind, die verarbeitet werden soll, des Zugriffsverlaufs der Datei, die verarbeitet werden soll, und von der lokalen Dateibaumstruktur erfolgt,
• das Gesetz aus einem Referenzgesetz bestimmt wird, das im Hintergrund neu berechnet wird, durch Verarbeitungen in Abhängigkeit von Verwendungen des Benutzers, zum Steuern der Kopie einer entfernten Datei in den primären Speicher vor der Zugriffsanforderung auf die Datei, und um die gespeicherten Dateien in dem primären Speicher zu löschen, für die das Gesetz einen Nutzungsindikator unterhalb eines Schwellenwerts bestimmt,
• und dadurch, dass das Verfahren Schritte, die im Hintergrund ausgeführt werden, des Kopierens von in dem primären Schnellzugriffsspeicher (23 bis 28) gespeicherten Dateien in den sekundären Massenspeicher (21) aufweist,
• dadurch, dass ein Teil mindestens der Steuerungen zum Verändern einer Datei, die in dem sekundären Speicher gespeichert ist, das Herunterladen des Teils der Datei, die verändert werden soll, in den lokalen Speicher bewirkt, um den Teil der Datei, die zu verändern ist, in dem lokalen Speicher zu entsperren, um den Teil der Datei, die zu verändern ist, zu verändern, um den Teil der Datei zu sperren, und um die sekundäre Datei mit der primären Datei neu zu synchronisieren
• dadurch, dass es Umgruppierungsvorverarbeitungen im Hintergrund aufweist, die zu dem Zeitpunkt von Aktionen an den Dateien (log) durchgeführt werden, zum Trainieren eines neuronalen Netzwerks an diesen Logs, und aus einem vortrainierten Netzwerk zum Berechnen eines digitalen Indikators, der der zukünftigen Nutzungswahrscheinlichkeit für jede der Dateien entspricht, wobei die Adressierung einer Datei durch Anwendung eines kombinatorischen Optimierungsalgorithmus bestimmt wird, der auf den digitalen Nutzungswahrscheinlichkeitsindikator angewendet wird, und von Eigenschaften des lokalen Speichers und der Netzwerkkommunikation
• wobei die Vorverarbeitungen im Hintergrund die Umgruppierung von Informationen des Logs gemäß einem Nähekriterium (Vector Embedding) oder in Abhängigkeit von einem Indikator einer Vektordistanz zwischen den Dateien steuern.

2. Verfahren zum Verwalten des Dateisystems eines Computerendgeräts nach Anspruch 1, **dadurch gekennzeichnet, dass** die Baumstruktur der Dateien und die Indizierungstabelle aller lokalen und entfernten Dateien in dem primären Speicher gespeichert ist und dass das Betriebssystem Mittel zum transparenten Visualisieren der Baumstruktur aufweist.

3. Computerausrüstung, umfassend einen Prozessor (11) und einen oder mehrere lokale Speicher (12), beispielsweise einen Flash-Speicher oder eine Festplatte, sowie einen Speicher zum Speichern eines Codes, der das Verwalten des Dateisystems gemäß dem Verfahren nach Anspruch 1 steuert.

## Claims

1. Method for managing the file system of a computer terminal (20) comprising a processor (11) and one or more fast primary memories (23 to 28) and one or more secondary mass memories (21), said method comprising steps of periodically calculating the primary or secondary addressing of a digital file to be recorded, to be read or modified according to a periodically recalculated control rule to minimize the volume of the data transferred between the fast primary memory and the secondary mass memory and to minimize the local cache fault,
**characterized in that**
• said step of calculating the addressing depends on metadata present in said digital file to be processed, on the access history of said file to be processed and on the local tree structure of the files,
• said rule is determined from a reference rule, recalculated in the background, by processing depending on the uses of the user, to control the copying of a remote file to the primary memory before the request for access to the file, and to erase the files recorded in said primary memory for which said rule determines a use indicator below a threshold value,
• and **in that** said method comprises steps, which were carried out in the background, of copying the files recorded on said fast primary memory (23 to 28) onto said secondary mass memory (21),
• and **in that** at least some of the controls for modifying a file recorded in the secondary memory cause the downloading of the part of said file to be modified to the local memory, to unlock the part of the file to be modified on the primary memory, to modify said part of the file to be modified, to lock said part of the file and to resynchronize the secondary file with the primary file
• **in that** it comprises background grouping preprocessing carried out at the time of actions on the files (log), for training a neural network on these logs, and from a pre-trained network for calculating a digital indicator corresponding to the future probability of use for each of the files, the addressing of a file being determined by applying a combinatorial optimization algorithm applied to said digital indicator of probability of use and local memory and network communication characteristics
• said background pre-processing controls the grouping of the log information according to a proximity criterion (vector embedding) or on the basis of a vector distance indicator between said files.

2. Method for managing the file system of a computer terminal according to claim 1, **characterized in that** the tree structures of the files and the indexing table of all of the local and remote files is recorded in the primary memory, and **in that** the operating system comprises means for transparently displaying the tree structure.

3. Computer device comprising a processor (11) and one or more local memories (12), for example a flash memory or a hard drive, as well as a memory for recording a code controlling the management of the file system according to the method according to claim 1.
